# EUROPEAN PATENT SPECIFICATION

(11) **EP 4 019 139 B1**
(45) Date of publication and mention of the grant of the patent: **22.07.2026**
(21) Application number: 21211850.9
(22) Date of filing: 01.12.2021
(51) Int. Cl.: B02C 18/14, A01G 3/00, B02C 25/00, B02C 18/16

(54) **SHREDDER MECHANISM, SHREDDER APPARATUS, CONTROL SYSTEM AND METHODS THEREOF**
ZERKLEINERUNGSMECHANISMUS, ZERKLEINERUNGSVORRICHTUNG, STEUERUNGSSYSTEM UND VERFAHREN DAFÜR
MÉCANISME DE DÉCHIQUETAGE, APPAREIL DE DÉCHIQUETAGE, SYSTÈME DE COMMANDE ET PROCÉDÉS ASSOCIÉS

(30) Priority: 21.12.2020 CN 202011522710
(43) Date of publication of application: 29.06.2022
(73) Proprietor: Techtronic Cordless GP, Anderson, SC 29621 (US)
(72) Inventor: LEE, Wai Chung, Kwai Chung (HK); CHUNG, Koon For, Kwai Chung (HK); WU, Kun Hao, Dongguan City (CN); LAN, Xiao Di, Dongguan City (CN)
(74) Representative: Zimmermann & Partner Patentanwälte mbB

(56) References cited:
- EP-A1- 2 859 952
- WO-A1-2013/058653
- DE-U1- 29 514 085
- US-B2- 7 222 804

## Description

### Technical Field

The present invention relates to the field of power tools, and in particular to a shredding mechanism, a shredding device and a control system and method thereof. Particularly, it relates to a shredding mechanism according to the preamble of claim 1 and a method thereof according to the preamble of claim 8.

### Background Art

Undesirable wastes will be generated in some occasions. For example, in gardens, lawns, farmland or other places for specific purposes, some undesirable tree branches, fallen leaves, etc. will be generated. Especially for some large-sized wastes, it is desirable to crush them before cleaning and reduce their sizes to facilitate further treatment.

Existing shredding machines for treating these wastes have disadvantages in many aspects, such as unsatisfactory shredding results, designs not compact enough, inconvenience in adjusting the parameters associated with shredding, inability to well monitor the operation status, unsatisfactory safety, etc. A shredding mechanism according to the preamble of claim 1 is known from DE 295 140 85 U1.

### Brief Summary of the Invention

Targeting one or more technical disadvantages in prior art, the present invention provides a shredding mechanism, a shredding device and a control system and method thereof.

A shredding mechanism according to the present invention is defined in independent claim 1.

According to the present invention, the shredding mechanism comprises a shredding component and an adjusting component, wherein the shredding component is used to shred materials, the adjusting component and the shredding component define an operation space for shredding operation, and the adjusting component and the shredding component are configured to be able to move relative to each other so as to change the size of the operation space.

Optionally or additionally, the adjusting component comprises a plate part, which operably moves, preferably pivots, to adjust the operation space.

According to the invention, the shredding mechanism further comprises a drive component, which is coupled with the adjusting component so as to operably drive the adjusting component to move relative to the shredding component. The drive component moves linearly or rotates or both when driving the adjusting component. The drive component is able to be operated manually or electrically or both. The drive component may be a spiral component, in particular comprising a bolt.

Further, according to the invention, the shredding mechanism comprises a locking component, which operably switches the drive component between a first status and a second status, wherein the drive component, in the first status, is allowed to make only fine adjustment, and, in the second status, is allowed to make rough adjustment.

Optionally or additionally, the drive component drives the adjusting component along a first direction toward the shredding component, the locking component operates the drive component along a second direction different from the first direction, the drive component has a first thread, the locking component has a second thread, the second thread is configured to be able to engage the first thread so as to place the drive component in the first status, and the locking component is configured to operably move along the second direction so as to disengage the second thread and the first thread, thereby placing the drive component in the second status.

According to another aspect of the present invention, a shredding device is provided. The shredding device comprises a shredding body and a collecting part. The shredding body comprises a housing and a shredding mechanism according to claim 1, wherein the housing has an inlet used to received materials, and the shredding mechanism is provided in the housing and is configured to shred materials. The collecting part is connected to the shredding body and is used to receive materials after shredding operation.

Optionally or additionally, the housing has a window, so that at least part of the operation space is visually visible to the outside of the housing through the window, and optionally, the window is provided with a cover, which is configured to be able to shield or expose the window by, preferably, sliding or rotating or both.

According to yet another aspect of the present invention, a control system for a shredding device is provided. The shredding device comprises a shredding mechanism, which comprises a shredding component and an adjusting component, wherein the adjusting component and the shredding component define an operation space for shredding operation, and the adjusting component and the shredding component are configured to be able to move relative to each other so as to adjust the operation space. The control system comprises a detection circuit and a control circuit. The detection circuit is used to detect contact between the adjusting component and the shredding component, and the control circuit is used to respond when the detection circuit detects a contact.

Optionally or additionally, the detection circuit comprises a current sensor or a voltage sensor.

Optionally or additionally, the control system further comprises an alarm circuit, wherein the alarm circuit sends an alarm signal in response to the contact, and the alarm signal is a visual signal or an audio signal or both.

Optionally or additionally, the contact causes making of the detection circuit and hence causes a change in an electric signal, for example, a current change or a voltage change in the detection circuit, in particular with one or more current spike signals, or with one or more voltage spike signals.

Optionally or additionally, the control circuit is also configured to send a control signal to stop providing power to the shredding component upon the contact.

According to the above-mentioned aspect of the present invention, the control system further comprises a user interface, which is configured to be used to receive a user input to put the shredding device in a calibration mode, thereby activating the detection circuit. The user interface also comprises one or more of the following: a component used to receive a user input to put the shredding component in the reverse direction; a component used to indicate the contact; a component used to indicate blocking of the operation space; a component used to indicate overload of the shredding device; a component used to indicate the power level of the power supply device of the shredding device; and a component used to receive a user input to change the operation speed of the shredding component.

According to another aspect of the present disclosure, a control method for a shredding device is provided. The shredding device comprises a shredding component and an adjusting component, wherein the adjusting component and the shredding component define an operation space for shredding operation, and the control method comprises detecting whether there is contact between the adjusting component and the shredding component, and responding when there is the contact.

Optionally or additionally, the method further comprises detecting an electric signal of a circuit, preferably a current value or a voltage value, and deciding whether there is the contact through the electric signal, wherein the shredding component and the adjusting component electrically constitute part of the circuit.

Optionally or additionally, the method further comprises comparing the electric signal with a predetermined threshold, and deciding whether there is the contact based on the comparison result. The method further comprises sending an alarm signal when there is the contact, wherein the alarm signal is a visual signal or an audio signal or a combination thereof.

Optionally or additionally, the method further comprises putting the shredding component in reverse operation, and stopping providing power to the shredding mechanism when there is the contact.

Optionally or additionally, the method further comprises switching the shredding device between a normal mode and a calibration mode, and, in the calibration mode, putting the shredding component in reverse operation, and adjusting the distance between the adjusting component and the shredding component.

According to still another aspect of the present disclosure, a control method for a shredding device is provided. The shredding device comprises a shredding component and an adjusting component, wherein the adjusting component and the shredding component define an operation space for shredding operation, and the control method comprises moving at least part of the adjusting component relative to the shredding component so as to change the size of the operation space.

Optionally or additionally, the step of moving at least part of the adjusting component relative to the shredding component comprises pivoting the adjusting component so that the at least part of the adjusting component becomes closer to or farther away from the shredding component.

Optionally or additionally, the step of moving at least part of the adjusting component relative to the shredding component comprises driving the adjusting component by a drive component so that the at least part of the adjusting component becomes closer to or farther away from the shredding component.

According to still another aspect of the present disclosure, a control method for a shredding device is provided. The shredding device comprises a shredding component and an adjusting component, wherein the adjusting component and the shredding component define an operation space for shredding operation, and the control method comprises: switching the shredding device from a first mode to a second mode, wherein, in the first mode, the shredding component runs toward a first direction of rotation, and, in the second mode, the shredding component runs toward a second direction of rotation opposite to the first direction of rotation; driving the adjusting component so that at least part of the adjusting component moves closer to the shredding component, so as to reduce the operation space; detecting whether the adjusting component is in contact with the shredding component; stopping providing power to the shredding component upon contact; and moving the at least part of the adjusting component away from the shredding component, to enlarge the operation space.

According to still another aspect of the present disclosure, a control system for a shredding device is provided. The shredding device comprises a shredding mechanism, which comprises a shredding component and an adjusting component, wherein the adjusting component and the shredding component define an operation space for shredding operation, and the adjusting component and the shredding component are configured to be able to move relative to each other so as to adjust the operation space. The control system comprises a detection circuit, a controller, a network interface, and an electronic device. The detection circuit is used to detect contact between the adjusting component and the shredding component, the controller is used to control one or more operations of the shredding device, wherein the controller is in electrical connection with the detection circuit and in communication connection with the network interface, and the electronic device is in communication connection with the network interface via one or more networks and manipulates the shredding device. The electronic device is in particular a mobile electronic device, which comprises a user interface for receiving user inputs to remotely manipulate the shredding device.

The shredding mechanism, shredding device and the control system and method according to one or more embodiments of the present invention have several advantages. For example, with the device or system according to one or more embodiments of the present invention, it is easy to adjust the operations associated with shredding, and it helps to improve shredding efficiency. In addition, with the device, system and method according to one or more embodiments of the present invention, it is easy to monitor, adjust and manipulate the operation, and it is safe and convenient. In addition, the device, system and method according to one or more embodiments of the present invention are simple, compact and easy to use, and are highly applicable.

More embodiments and beneficial technical effects of the present invention will be described in detail below.

### Brief Description of the Drawings

Figure 1A is a schematic diagram of the shredding device according to some embodiments of the present invention.
Figure 1B is a top view of the shredding device shown in Figure 1A.
Figure 1C is a schematic diagram of a power supply device that can be used for the shredding device shown in Figure 1A.
Figure 2 is a schematic diagram of the shredding mechanism according to some embodiments of the present invention.
Figure 3A is a schematic diagram of the shredding mechanism according to some other embodiments of the present invention.
Figure 3B is a schematic diagram of the shredding mechanism shown in Figure 3A with a changed operation space.
Figure 4 is a schematic diagram of the shredding mechanism according to yet some other embodiments of the present invention.
Figure 5A is a schematic diagram of the shredding device according to some embodiments of the present invention.
Figure 5B is a schematic diagram of the shredding device shown in Figure 5A with the window cover removed.
Figure 6 is a schematic diagram of the control system according to some embodiments of the present invention.
Figure 7 is a schematic diagram of the control system according to some other embodiments of the present invention.
Figure 8 is a flowchart of the control method according to some embodiments of the present invention.
Figure 9 is a flowchart of the control system according to some other embodiments of the present invention.
Figure 10 is a schematic diagram of the control system according to some other embodiments of the present invention.

### Detailed Description of the Embodiments

In order to facilitate the understanding of the present invention, a number of exemplary embodiments will be described below with reference to related drawings. Those skilled in the art should understand that the embodiments herein are only for the purpose of exemplifying the present invention, and are by no means limiting the present invention.

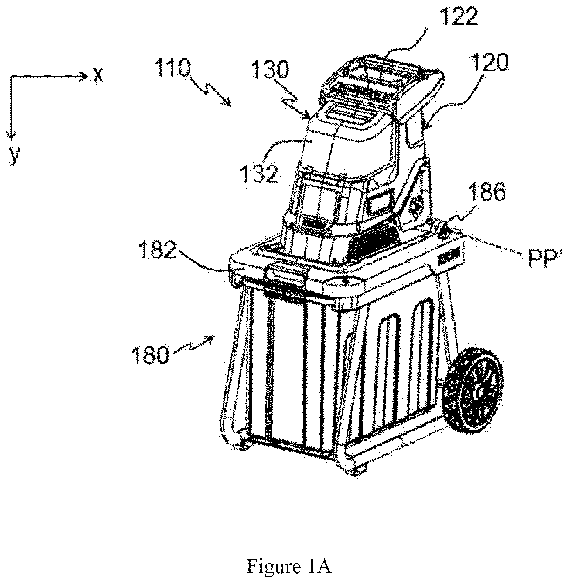

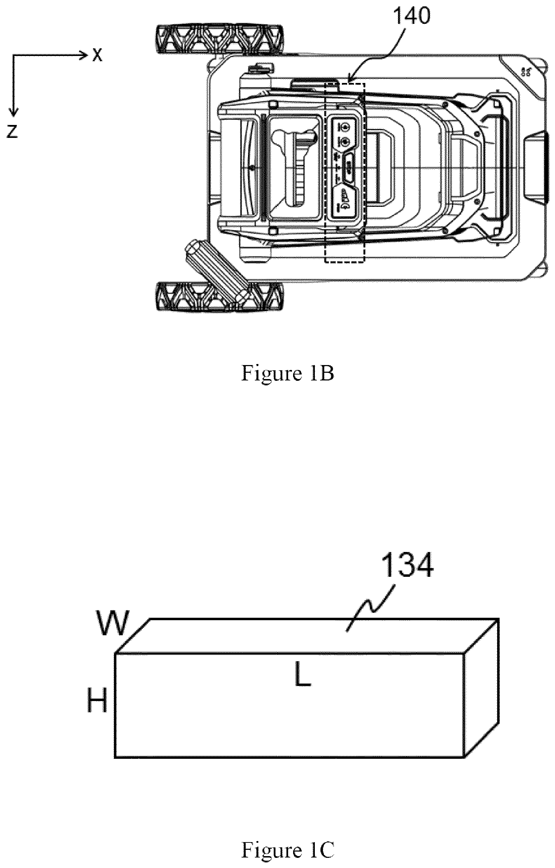

According to one aspect of the present invention, Figures 1A and 1B are schematic diagrams of the shredding device according to some embodiments of the present invention. The shredding device may be, for example, a shredder, equipment, machine, etc., used to treat or handle materials. The materials may be undesirable materials that appear at specific locations or places, such as garden wastes, including but not limited to tree branches, fallen leaves, weeds, and undesirable objects produced by humans, such as waste paper, debris, etc.

As shown, the shredding device comprises a shredding body 110 and a collecting part 180. The shredding body 110 is used to shred materials, and the collecting part 180, essentially provided below the shredding body 110 and connected to the shredding body 110, is used to receive or accommodate materials after shredding operation. As an example, the collecting part 180 takes the form of a cube or box. Other suitable forms are also possible.

The shredding body 110 comprises a housing 120. The housing 120 has an inlet 122, and a shredding mechanism (not shown) is provided in the housing 120. During operation, the materials enter the housing 120 through the inlet 122 and are then treated by the shredding mechanism.

Optionally, when not used, the shredding body 110 can be accommodated in the collecting part 180, and the status can be referred to as the accommodation status of the shredding device or the shredding mechanism, while the normal operation status of the shredding device can be referred to as the working status. In the accommodation status, most or all of the shredding body 110 can be accommodated in the space of the collecting part 180, which is advantageous for storage, transportation, etc. It not only saves space, but also protects the shredding body 110. For example, it can prevent or reduce water, chemical substances, atmosphere and other undesirable matters from entering or contacting the shredding body 110, which is helpful for protecting the mechanical parts, electrical components, circuits, etc. therein and can also extend the service life of the shredding device.

Switching the shredding body 110 from the working status to the accommodation status may be achieved in a plurality of ways. As an example, as shown, an appropriate positioning or locking mechanism (not shown) is provided on the top 182 of the collecting part 180. In the working status, the positioning mechanism positions or locks the shredding body 110. The top 182 is also provided with an elastic member 186 (for example, a pair of torsional springs, with only one of them shown in Figure 1A and the other shielded by the housing). The elastic member 186 facilitates positioning of the shredding body 110, but at the same time allows the shredding body 110 to pivot about the axis PP'. To switch the shredding body 110 to the accommodation status, the positioning mechanism can be firstly operated to release it, and then the shredding body 110 is collapsed about PP' into the collecting part 180.

A power unit, for example, a motor, may be provided in the housing 120 to provide power to the shredding mechanism. A power supply cover 132 is provided on the housing 120. The power supply cover 132 may be set independently, or as part of the housing 120 to make the design more compact and streamlined. The power supply cover 132 defines a power supply chamber by itself or together with the housing 120. The power supply chamber can be used to accommodate a power supply device, for example, a battery pack or an assembled battery, to provide power to the power unit. A safety key may also be provided in the power supply chamber to prevent unexpected start-up of the power supply device.

Figure 1C shows the battery pack 134. The battery pack 134 can be, for example, used for the shredding device shown in Figure 1A, and can be accommodated in the power supply chamber. For ease of description, the battery pack 134 is shown as a cuboid with the length, width and height respectively represented by L, W and H, wherein L is greater than W and L is greater than H. In the shredding device, the battery pack 134 may be set in a vertical configuration or a horizontal configuration. In the vertical configuration, the long side L of the battery pack 134 is essentially parallel to the direction y shown in Figure 1A. In the horizontal configuration, the long side L of the battery pack 134 is essentially parallel to the direction z shown in Figure 1B. In other words, the long side L of the battery pack 134 is essentially parallel to the pivotal axis PP' of the shredding body 110.

In some embodiments, it is advantageous to adopt the horizontal configuration of the battery pack. In this way, for example, in the process of switching the shredding body from the working status to the accommodation status, no undesired obstruction will be caused. That is, the switching process can be completed without removing the battery pack.

In addition, optionally, a user interface or UI 140 (Figure 1B) is provided on the housing 120, so as to facilitate interaction between the user and the shredding device. For example, the user interface 140 may display to the user one or more statuses of the shredding device, such as the battery level and blocking. For another example, the user interface 140 may allow the user to input one or more variables to manipulate the shredding device.

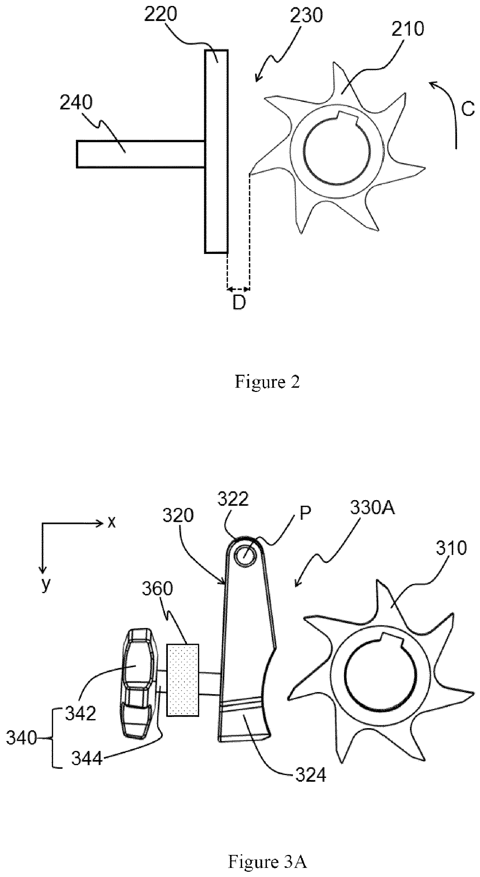

According to another aspect of the present invention, Figure 2 is a schematic diagram of the shredding mechanism according to some embodiments of the present invention. The shredding mechanism may be, for example, a specific implementation of the shredding mechanism of the shredding device shown in Figures 1A and 1B and provided in its housing.

As shown in Figure 2, the shredding mechanism comprises a shredding component 210 and an adjusting component 220. The materials to be shredded may abut the adjusting component 220. The shredding component 210 is used to shred, for example, cut, the materials abutting the adjusting component 220. The adjusting component 220 and the shredding component 210 define an operation space or operation clearance 230 for shredding operation. The size of the operation space 230 can be adjusted by the relative movement between the adjusting component 220 and the shredding component 210. In some embodiments, at least part of the adjusting component 220 can move relative to the shredding component 210, thereby changing the size of the operation space 230.

The shredding component 210 is, for example, made of a material of a certain hardness, and has such functions as cutting, breaking or tearing. The shredding component 210 has, for example, an edge with the size formed sufficiently to perform one or more functions of cutting, breaking and tearing. In this embodiment, the shredding component 210 is illustrated in the form of a rolling cutter with six blades or cutter points, which rotates counter-clockwise in the direction C during operation. Other suitable forms of the shredding component are also possible.

The operation space 230 may be understood, for example, as the permissible operation space between the shredding component and the adjusting component where materials are located when passing the shredding mechanism. According to actual needs, different physical quantities may be used to characterize the operation space 230. For example, the operation space 230 may be characterized by the shortest distance D between the adjusting component 220 and the shredding component 210. The operation space 230 affects the material shredding operation. For example, the distance D allows materials with a size (for example, the diameter) smaller than D to pass the shredding mechanism without being treated. That is, with an operation space corresponding to a smaller distance D, the size of treated materials is generally smaller in one or more dimensions. In perfectly ideal circumstances, treated materials will have a size in at least one direction no greater than D.

The adjusting component 220 can move toward or away from the shredding component 210, thereby adjusting the operation space 230. In some embodiments, it can also be arranged that the shredding component 210 can move toward or away from the adjusting component 220. The adjusting component 220 may be set to be able to move relative to the shredding component 210 as a whole, or it may be set to have only part of it able to move relative to the shredding component 210. This movement may be linear movement, or rotation, or a combination thereof. For example, in some embodiments, the adjusting component comprises a plate part, which operably moves, for example, with one end of the plate part able to pivot.

The adjusting component 220 may be manipulated manually, electrically, etc. By way of example, optionally, Figure 2 shows a drive component 240. The drive component 240 is coupled with the adjusting component 220 so as to drive the adjusting component 220 to move relative to the shredding component 210 during operation.

The drive component 240 moves linearly or rotates or both when driving the adjusting component 220. The drive component 240 can be manually operated, or electrically operated, or allows both, and thus the user can select the method as needed. For example, in some embodiments, the drive component 240 is connected to the output of a motor through a transmission system, thereby making it possible to operate the drive component 240 by use of the motor.

It is recognized in one or more embodiments herein that it is necessary to adjust the operation space in practice. This may be because of different reasons, for example, different material sizes. In addition, it is recognized in one or more embodiments herein that, with the use of the shredding mechanism and/or over time, the operation space may change due to wearing of the components, which will lower the effectiveness of shredding operation. Other reasons are also possible. In such circumstances, appropriate adjustment of the operation space is advantageous for improving the result of shredding operation. In addition to one or more other advantages, the device, mechanism, system, or method according to this embodiment and one or more embodiments below are also advantageous in this respect.

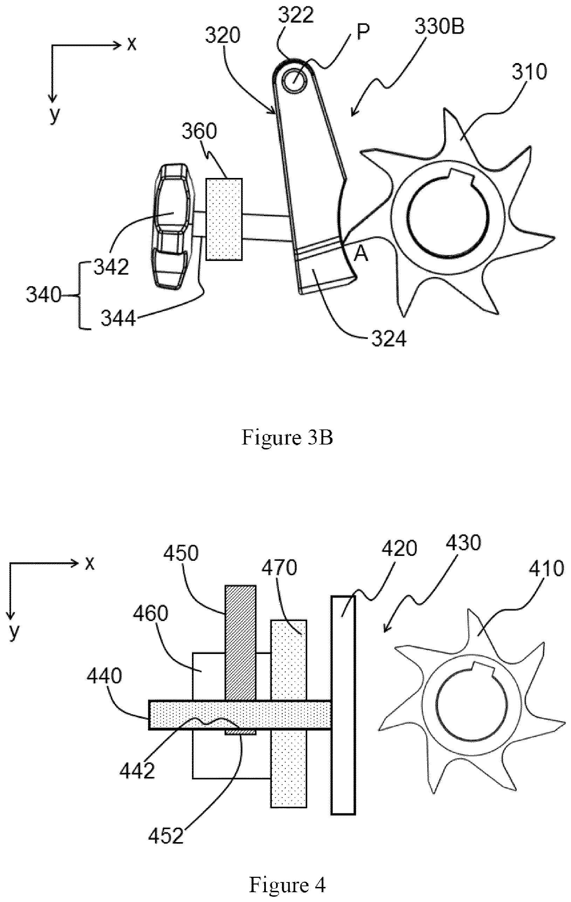

Figures 3A and 3B are schematic diagrams of the shredding mechanism according to yet some other embodiments of the present invention. The shredding mechanism shown may be, for example, a specific implementation of the shredding mechanism shown in Figure 2. The shredding mechanism may be, for example, used in the shredding device shown in Figures 1A and 1B.

In Figure 3A, the shredding component 310 and the adjusting component 320 define an operation space 330A. The adjusting component 320 may be provided inside or on the inner wall of the housing (for example, the housing 120 in Figure 1A) of the shredding device, or coupled with part of the housing in an appropriate manner. In this embodiment, the adjusting component 320 takes the form of a plate, the first end 322 is fixed to the inner wall (not shown) of the housing of the shredding device through a pivot P, and the second end 324 is suspended and can rotate relative to the pivot P.

The drive component 340 is illustrated as a spiral component, for example, a bolt. The drive component 340 comprises a knob 342 and a screw 344 connected to the knob 342. The end of the screw 344 away from the knob 342 is coupled with the second end 324 of the adjusting component 320, so as to drive the movement of the second end 324 and provide support for the second end 324. The screw 344 may be connected to the second end 324 or separated from it. In some embodiments, it is advantageous to connect them together. Taking Figure 3A as an example, this may allow the second end 324 to be pivoted to the left, so that there is more room for adjusting the operation space.

The drive component 340 is coupled with the housing of the shredding device (for simplicity, Figures 3A and 3B only show a part 360 of the housing), and more specifically, the screw 344 passes through the housing 360 through a hole (not shown) in the housing. That is, the knob 342 is outside the housing of the shredding device, and others such as the shredding component 310 and the adjusting component 320 are located inside the housing of the shredding device, thereby allowing personnel to operate the adjusting component from the outside of the shredding device to adjust the operation space without the need to open the housing.

The screw 344 has a thread, and the position on the housing in contact with the screw 344 (i.e., the inner wall of the hole) is also provided with a thread. The thread on the inner wall of the hole matches the thread of the screw 344, so that the drive component 340 can be fixed or locked when the knob 342 is not rotated. When the knob 342 is rotated, depending on the direction of rotation, the screw 344 moves in the forward direction x or the reverse direction, so that the second end 324 of the adjusting component 320 respectively moves toward or away from the shredding component 310.

Compared with Figure 3A, in Figure 3B, when the screw 344 is screwed in the direction x, the second end 324 comes into contact with the point A of one blade of the shredding component 310. The operation space 330B is reduced compared with the operation space 330A.

In some other embodiments, the knob is not set to rotate. Instead, the knob can be pressed (for example, in the positive direction of x in Figure 3A) or pulled (for example, in the negative direction of x in Figure 3A) to drive the adjusting component. In this case, the drive component only performs linear motion but not rotation during operation.

Figure 4 is a schematic diagram of the shredding mechanism according to some other embodiments of the present invention. In Figure 4, the shredding component 410 and the adjusting component 420 define an operation space 430. The drive component 440 is coupled with the adjusting component 420 to drive the adjusting component 420 in a direction parallel to the x-axis.

A locking component 450 is shown in Figure 4. The locking component 450 can switch the drive component 440 between a first status and a second status. The first status is, for example, the locked status, and the second status is, for example, the unlocked status. The drive component 440, in the locked status, is prevented from driving the adjusting component 420, and, in the unlocked status, is allowed to drive the adjusting component 420. This can prevent undesired changes in the operation space 430 due to accidental contact.

In some embodiments, the locking component 450 is illustrated as a quick release mechanism. The first status is, for example, the fine adjustment status or inching status, and the second status is, for example, the rough adjustment status. The locking component 450 can switch the drive component 440 between the fine adjustment status and the rough adjustment status. In the fine adjustment status, the drive component 440 can adjust the operation space 430 at a slow rate. In the rough adjustment status, the drive component 440 can adjust the operation space 430 at a higher rate. In some embodiments, the locking component 450 is coupled with the drive component 440 though a base 460. The base 460 is coupled with a part 470 of the housing of the shredding device, and the base 460 itself can also be provided as part of the housing 470.

The locking component 450 and the drive component 440 pass through respective holes in the base 460. The drive component 440 has a first thread, and one end 452 of the locking component 450 has a second thread. At the position of their respective hole, both the first thread and the second thread are exposed from the inner wall of their respective hole. At the bottom end 442 of the drive component 440, the second thread engages the first thread, thereby placing the drive component 440 in the locked status or the fine adjustment status (in Figure 4, for clarity, the bottom end 442 is separated from the end 452, but the two actually engage in the locked status). In order to unlock the drive component 440 or for rough adjustment, the locking component 450 can be moved downward in the direction y (for example, by pressing or pushing), so that the second thread can be disengaged from the first thread. In the unlocked status, the drive component 440 can move freely in the direction x (for example, in linear movement, or a combination of rotation and linear movement).

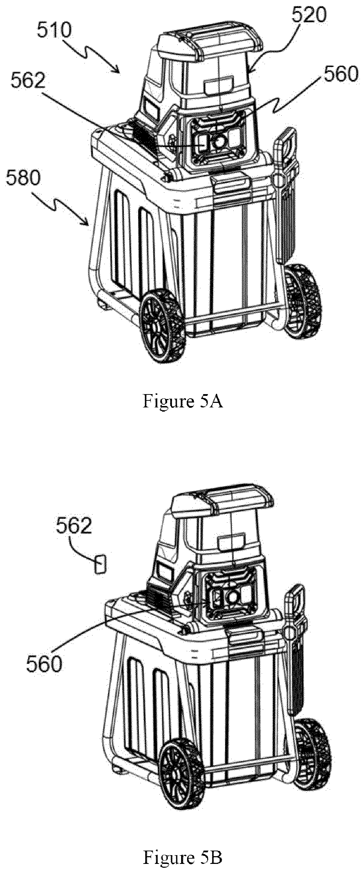

Figures 5A and 5B are schematic diagrams of the shredding device according to some other embodiments of the present invention. The shredding mechanism may be a specific implementation of the shredding device shown in Figures 1A and 1B.

The shredding device comprises a shredding body 510 and a collecting part 580. The housing 520 of the shredding body 510 is provided with a shredding mechanism, such as the shredding mechanism illustrated with reference to any of Figures 2 to 4. A window 560 is provided on at least part of the housing 520. Through the window 560, at least part of the operation space is visually visible to the outside of the housing 520, which may be visually visible in a wide angle range or at a certain angle. Hence, the internal conditions can be viewed without the need to open the housing, which is advantageous for operation.

Optionally, as illustrated, the window 560 is provided with a cover 562. In Figure 5B, for clarity, the cover 562 is moved to the outside of the shredding device. The cover 562 is configured to cover or expose the window 560 by sliding (for example, translational sliding) or rotating (for example, pivoting). The cover 562 can prevent materials from popping up from the window 560 during operation, which may otherwise cause risks to personnel and will need to be collected again. In some cases, the cover 562 can also prevent foreign objects from entering the housing, thereby protecting the components or operations inside the housing.

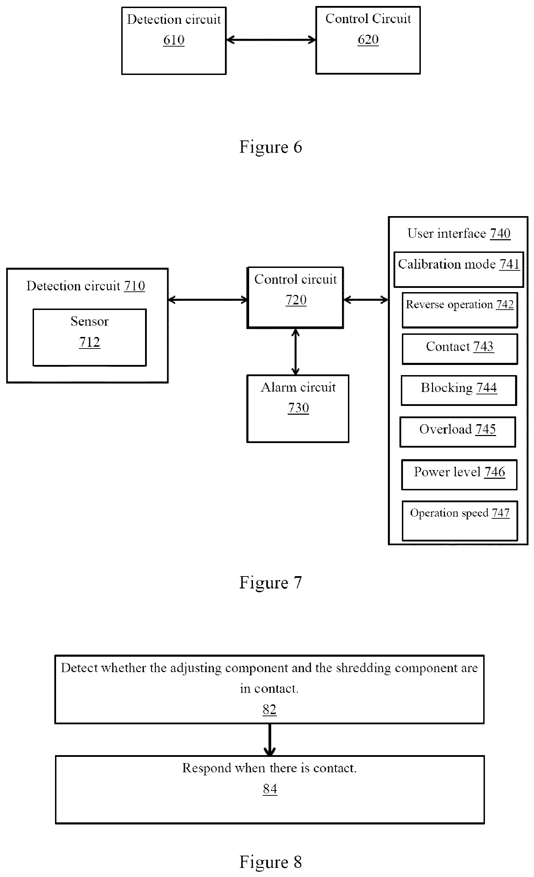

According to another aspect of the present invention, Figure 6 is a schematic diagram of the control system according to some embodiments of the present invention. The control system may be used, for example, to control the shredding device with reference to Figures 1A, 1B, 5A, and 5B. In the description herein, the meanings of the terms "control of the shredding device" and "control of the shredding mechanism" are somehow overlapped. In some cases, the two express the same or essentially the same meaning.

As shown in Figure 6, the control system comprises a detection circuit 610 and a control circuit 620. The detection circuit 610 may be used to detect contact between the adjusting component and the shredding component of the shredding device. The control circuit 620 may be used to respond when the detection circuit detects the contact. The responses include, for example, moving the adjusting component away from the shredding component, emergency-stopping the shredding component, or powering off the shredding device, etc. The control system may be always running when the shredding device is in the working status, or it may run by choice when the shredding device is in a non-working status.

The contact between the adjusting component and the shredding component is undesirable. For example, it will cause damage, wear, operation hazards, etc. The control system can better prevent or reduce undesired contact between them, and take timely measures when such contact occurs, which improves safety and is also beneficial to the life of the device. On the other hand, an excessively large operation space between the adjusting component and the shredding component is also undesirable, because it will affect the shredding result or reduce shredding efficiency. The control system can better assist in adjusting or controlling the size of the operation space, so as to continuously ensure efficient operation of the shredding device.

In addition, the control system shown in Figure 6 may be provided on one or more circuit boards of the shredding device, integrated into the circuit system of the shredding device as part of the circuitry, or provided as an independent circuit module in electrical communication with other circuit systems of the shredding device. In some embodiments, at least part of the control system may also be physically located outside the shredding device, which communicates with the shredding device in a wired or wireless manner.

Figure 7 is a schematic diagram of the control system according to still some other embodiments of the present invention. The system shown in Figure 7 is, for example, a specific implementation of the control system shown in Figure 6.

As shown in Figure 7, the control system comprises a detection circuit 710 and a control circuit 720. The detection circuit 710 comprises a sensor 712 for sensing the magnitude of an electrical signal generated. As an example, the sensor 712 is a current sensor for sensing the magnitude of a current. The shredding component and the adjusting component of the shredding device are set as part of the detection circuit 710. When the two come into contact, the detection circuit 710 forms a closed loop, thereby causing the current to increase significantly, or causing a peak value. **In** some embodiments, the sensor 712 is a voltage sensor for sensing a voltage or level signal. As an example, the shredding component and the adjusting component of the shredding device are set as part of the detection circuit 710. When the two come into contact, the detection circuit 710 forms a closed loop, and the voltage sensor detects a changed voltage signal, for example, an increased voltage or a peak voltage. This can be achieved, for example, by measuring the terminal voltage of an element (for example, a resistor element) connected to the detection circuit. It is also possible to detect the voltage of another circuit element or circuit node. Other types of sensor are also possible. In some embodiments, the contact or relative positions of the shredding component and the adjusting component of the shredding device are monitored by detecting other electrical signals than voltage and current.

In some embodiments, when the shredding component and the adjusting component come into contact, the shredding component is still rotating for various reasons (for example, due to its own inertia or system settings), and the aforementioned contact will be intermittent. Therefore, one or more current spikes, or one or more voltage spikes, or other detectable electrical signals, will occur in the detection circuit. A spike usually indicates an increase in the magnitude of a physical quantity. A current spike or voltage spike may be positive or negative.

The control circuit 720 receives the detection result, for example, a current value or a voltage value, from the detection circuit 710, and analyzes the detection result and responds to it. For example, when the analysis shows that the shredding component and the adjusting component are in contact, it will send a control signal to stop the power supply to the shredding component.

The control circuit 720 determines whether contact has occurred through appropriate analysis. For example, if a certain number (for example, 2 times, 5 times, 10 times, or more) of current spikes occur within a certain period of time (for example, a few seconds or a few milliseconds), the control circuit 720 determines that a contact has occurred. An electric signal may be compared with a predetermined threshold to decide whether there is a contact based on the comparison result. For example, in some embodiments, the control circuit 720 compares the detected current value with a predetermined current threshold, and, if the current value is greater than the predetermined current threshold, it is decided that a contact has occurred. Similarly, if a certain number (for example, 2 times, 5 times, 10 times, or more) of low levels occur within a certain period of time (for example, a few seconds or a few milliseconds), the control circuit 720 determines that a contact has occurred. In some embodiments, the control circuit 720 compares the detected voltage value with a predetermined voltage threshold, and, if the voltage value is greater than the predetermined voltage threshold, it is decided that a contact has occurred. Other criteria for determining the occurrence of a contact are also possible.

Although the detection of current increase or voltage increase is exemplified here, in some embodiments, it is also possible to determine that a contact has occurred by detecting a current decrease or a voltage decrease through appropriate circuit design.

The control system shown in Figure 7 further comprises an alarm circuit 730. When the shredding component and the adjusting component come into contact, the alarm circuit 730 can send an alarm signal. The alarm signal can be used to alert the user, and can also be used to trigger a response by an internal circuit, thereby increasing operation safety. The alarm signal may be a visual signal, for example a colour, a flashing light, and a combination thereof. The alarm signal may also be an audio signal, for example, a long beep, a short beep, etc. In some embodiments, the alarm circuit simultaneously sends an audio signal and a visual signal to further enhance the effect of the alarm and increase the applicability to different users (for example, users with visual or hearing impairments).

In addition, the control system shown further comprises user interfaces 740 to facilitate interaction with the user. As an example, the user interfaces 740 comprises calibration mode 741, reverse operation 742, contact 743, blocking 744, overload 745, power level 746, and operation speed 747. As an example, calibration mode 741 can be used to put the shredding device in the calibration mode, thereby activating the detection circuit, reverse operation 742 can be used to put the shredding component in reverse operation, contact 743 can be used to indicate a contact between the shredding component and the adjusting component, blocking 744 can be used to indicate blocking of the operation space (for example, due to lowered shredding efficiency), overload 745 can be used to indicate overload of the shredding device (for example, due to an excessive quantity of materials), power level 746 can be used to indicate the power level of the power supply device (for example, a battery pack) of the shredding device, and operation speed 747 can be used to change the operation speed of the shredding component.

These illustrative user interfaces may be keys, buttons, icons, or other appropriate forms. One or more of the user interfaces can be used to receive user inputs, so as to manipulate one or more components and physical quantities of the shredding device, for example, calibration mode 741, operation speed 747, etc. One or more of the user interfaces can be used for outputs to the user, for example, for displaying the status or parameters of one or more components of the shredding device, for example, contact 743, overload 745, etc. When used as an output display, it can take appropriate forms, for example, a colour, a combination and changes of multiple colours, flashing, colour bar length and changes thereof, etc., and can be accompanied by an audio signal.

In some embodiments, when contact 743 or overload 745 is triggered, the power supply to the shredding device is automatically cut off. When blocking 744 is triggered, for example, the reverse rotation of the shredding component is automatically triggered, or forward rotation and reverse rotation are alternately performed for a period of time for unblocking.

According to yet another aspect of the present invention, Figure 8 is a flowchart of the control method according to some embodiments of the present invention. The control method shown may be used, for example, to manipulate the control system described in Figure 6 or Figure 7. The control method shown may be used, for example, to control or operate the shredding device with reference to Figures 1A, 1B, 5A, and 5B.

At box 82, whether there is contact between the adjusting component and the shredding component is detected. For example, whether a contact occurs is decided by detecting the current value or voltage value of a circuit, and by use of the current value or the current curve, or the voltage value or the voltage curve. Optionally, the shredding component and the adjusting component electrically constitute part of the detected circuit, which is advantageous for reducing the complexity of the circuit. The detection may occur during the operation process of the shredding device, or it may be activated by entering the calibration mode.

At box 84, a response is given when there is contact. For example, when a contact between the adjusting component and the shredding component is detected, an alarm signal is sent, and the alarm signal is a visual signal or an audio signal or a combination thereof. In some embodiments, the shredding device is switched to the normal mode. When a contact is detected, the power supply to the shredding mechanism is stopped, for example, by cutting off the power supply of the battery to the motor, or by cutting off the electrical connection between the motor and the shredding mechanism.

In some embodiments, the shredding device is switched to the calibration mode, and then the shredding component is stopped or reversed (i.e., with the shredding component running in a direction opposite to that in the normal mode), and the distance between the adjusting component and the shredding component is automatically or manually adjusted.

In yet some other embodiments, the shredding device needs to be put in the calibration mode before the operation space can be adjusted, though this requirement is unnecessary for some other embodiments.

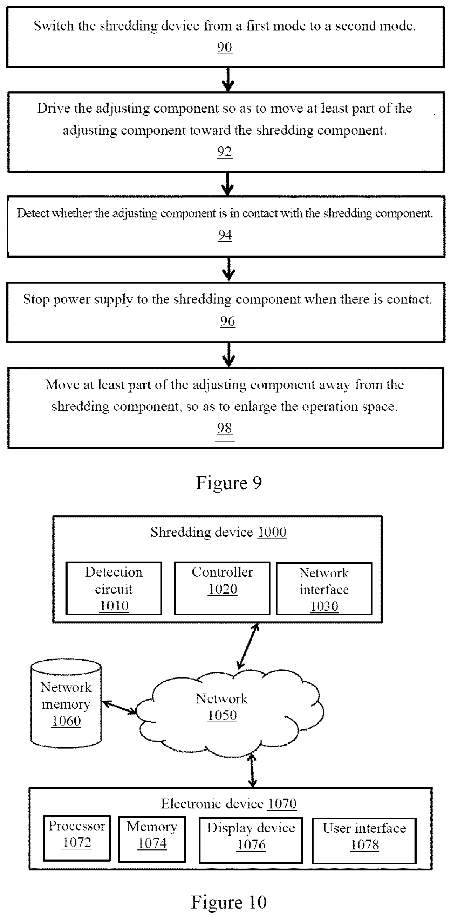

Figure 9 is a flowchart of the control method according to still some other embodiments of the present invention. The method shown may be, for example, a specific implementation of the method shown in Figure 8.

At box 90, the shredding device is switched from a first mode to a second mode. In the first mode, the shredding component runs toward a first direction of rotation, and, in the second mode, the shredding component runs toward a second direction of rotation opposite to the first direction of rotation. The first mode is, for example, the normal mode, and the second mode is, for example, the calibration mode. The first direction of rotation is, for example, the counter-clockwise direction, and the second direction of rotation is, for example, the clockwise direction. The switching operation may be achieved, for example, by triggering the calibration mode button on a user interface.

At box 92, the adjusting component is automatically or manually driven to move at least part of the adjusting component toward the shredding component, so as to reduce the operation space. The adjusting component and the shredding component are, for example, one of the adjusting components and one of the shredding components illustrated with reference to Figures 2, 3A, 3B, and 4.

At box 94, whether the adjusting component is in contact with the shredding component is detected. For example, it can be detected by the control system illustrated in Figure 6 or Figure 7. At box 96, when there is contact, power to the shredding component is stopped (when the shredding component is in reverse rotation). For example, this can be achieved by, for example, sending an instruction by the control circuit illustrated in Figure 6 or Figure 7 to cut off the power supply to the motor. At box 98, at least part of the adjusting component is moved automatically or manually away from the shredding component, so as to enlarge the operation space. In the automatic manner, it is moved away by a predetermined distance. In the manual manner, the user can observe the operation space through the window 560. Hence, the adjusting component and the shredding component are no longer in contact, and the operation space can be adjusted to an appropriate size according to actual needs.

According to still another aspect of the present invention, Figure 10 is a schematic diagram of the control system according to some embodiments of the present invention. The control system may be used, for example, to control or operate the shredding device illustrated with reference to Figures 1A, 1B, 5A, and 5B.

A shredding device 1000 and an electronic device 1070 are illustrated in Figure 10. The electronic device 1070 can communicate with the shredding device 1000 through one or more networks 1050.

The shredding device 1000 is provided with a detection circuit 1010, a controller 1020, and a network interface 1030. The detection circuit 1010 may be used, for example, to detect contact between the adjusting component and the shredding component of the shredding device 1000. The controller 1020 is used to control one or more operations of the shredding device 1000. The controller 1020 is connected to the detection circuit 1010 and the network interface 1030.

The network memory 1060 may comprise one or more memories, databases, etc., and these memories or databases may store one or more text files, image files, audio files, video files, software applications, etc. For example, the network memory 1060 may store data information obtained by the method described above with reference to one or more boxes in Figures 8 and 9 and computer instructions and/or application programs stored in the electronic device 1070. And as a result, the electronic device 1070 with an appropriate application program can obtain the required information and instructions from the network memory 1060 through the network 1050 to execute one or more methods described herein.

The electronic device 1070 comprises a processor 1072, a memory 1074, a display device 1076, and a user interface 1078. The electronic device 1070 may be a desktop computer or a mobile electronic device (for example, a smart phone, an iPad, etc.) The electronic device 1070 enables remotely acquiring data information from the shredding device 1000, displaying and analyzing the information, and sending instructions to the shredding device 1000 based on the analysis result. It is also possible to directly interact with the shredding device 1000 through the user interface 1028, for example, to directly manipulate the shredding device 1000.

The electronic device 1070 is configured to, for example, be able to perform one or more of the methods described herein via the network 1050. The electronic device 1070 is configured to, for example, directly access the network memory 1060 through the network 1050 and/or obtain from the network memory 1060 one or more items of data related to the control or operation of the shredding device 1000 obtained according to one or more of the above methods.

The electronic device 1070 may also directly obtain one or more items of data from the controller 1020 of the shredding device 1000 through the network 1050. For example, the current detected by the detection circuit 1010 may be directly transmitted to the electronic device 1070, then the current information is analysed and processed at the electronic device 1070, and then an instruction is sent to the controller 1020 to manipulate the shredding device 1000.

Hence, the system illustrated in Figure 10 allows off-site monitoring and manipulation of the shredding device, and interaction with the shredding device. In this way, operation convenience and efficiency are improved. For example, a user who carries the appropriate electronic device (for example, a smart phone) can remotely monitor and operate the corresponding networked shredding device.

The foregoing multiple embodiments are only for the purpose of exemplifying one or more ideas of the present invention, and are not intended to limit the present invention. For example, although one shredding component and one adjusting component are illustrated in Figures 2 to 4, those skilled in the art will understand that more than one shredding component, or more than one adjusting component, or a combination thereof, may be provided according to actual needs.

In addition, the drawings herein are only schematic and do not represent the actual shapes, sizes, proportions, etc. of the corresponding components, mechanisms, devices, etc. For example, Figure 1C shows the battery pack 134 as a cuboid, which is only to illustrate the idea of the corresponding embodiments of the present invention, but not to impose a limitation on the corresponding embodiments.

For another example, Figure 10 illustrates one electronic device and one shredding device, which is only illustrative. In some embodiments, one electronic device may communicate with two or more networked shredding devices. In some other embodiments, a plurality of electronic devices may communicate with the same networked shredding device.

In addition, in Figure 10, the detection circuit 1010, the controller 1020, and the network interface 1030 are placed in the block of the shredding device 1000. This is only for the convenience of description and is illustrative. This does not mean that the detection circuit 1010, the controller 1020, and the network interface 1030 are physically provided on the shredding device 1000, but rather one or more of them may be provided independently of the shredding device, and then are connected to or communicate with the shredding device in a wired or wireless manner.

Those skilled in the art should also understand that the above embodiments attempt to illustrate one or more ideas of the present invention from different aspects, and they are not isolated; instead, those skilled in the art may combine different embodiments in an appropriate way based on the above examples to obtain other examples of the technical solution.

Unless otherwise defined, the technical and scientific terms used herein have the same meanings as commonly understood by those ordinarily skilled in the art of the present invention. The implementations of the present invention are illustrated in nonlimiting examples. On the basis of the above embodiments disclosed, various variations that can be conceived by those skilled in the art fall within the scope of the present invention.

## Claims

1. Shredding mechanism, comprising:
a shredding component (210, 310, 410), used to shred materials; and
an adjusting component (220, 320, 420), wherein the adjusting component (220, 320, 420) and the shredding component (210, 310, 410) define an operation space (230, 330, 430) for shredding operation, and the adjusting component (220, 320, 420) and the shredding component (210, 310, 410) are configured to be able to move relative to each other so as to change the size of the operation space (230, 330, 430), wherein the shredding mechanism further comprises a drive component (240, 340, 440), which is configured to be coupled with the adjusting component (220, 320, 420) so as to operably drive the adjusting component (220, 320, 420) to move relative to the shredding component (210, 310, 410),
**characterized in that** the shredding mechanism further comprises a locking component (450), which is configured to operably switch the drive component (440) between a first status and a second status, wherein the drive component (440), in the first status, is allowed to make only fine adjustment, and, in the second status, is allowed to make rough adjustment.

2. Shredding mechanism according to Claim 1, **characterized in that** the adjusting component (220, 320, 420) comprises a plate part, which operably moves, preferably pivots, to adjust the operation space (230, 330, 430).

3. Shredding mechanism according to Claim 1, **characterized in that** the drive component (240, 340, 440) is configured to move linearly or to rotate or both when driving the adjusting component (220, 320, 420), and preferably, the drive component (240, 340, 440) is configured to be operated manually or electrically or both.

4. Shredding mechanism according to Claim 1 or 3, **characterized in that** the drive component (240, 340, 440) is a spiral component, comprising in particular a bolt.

5. Shredding mechanism according to Claim 1, **characterized in that** the drive component (440) drives the adjusting component (220, 320, 420) along a first direction toward the shredding component (210, 310, 410), the locking component (450) operates the drive component (440) along a second direction different from the first direction, the drive component (440) has a first thread, the locking component (450) has a second thread, the second thread is configured to be able to engage the first thread so as to place the drive component (440) in the first status, and the locking component (450) is configured to operably move along the second direction so as to disengage the second thread and the first thread, thereby placing the drive component (440) in the second status.

6. Shredding device, **characterized in that** it comprises:
a shredding body (110, 510), comprising a housing (120, 520) and the shredding mechanism according to any of Claims 1 to 5, wherein the housing (120, 520) has an inlet (122) used to received materials, and the shredding mechanism is provided in the housing (120, 520) and is configured to shred materials; and
a collecting part (180, 580), connected to the shredding body (110, 510) and used to receive materials after shredding operation.

7. Shredding device according to Claim 6, **characterized in that** the housing (520) has a window (560), so that at least part of the operation space (230, 330, 430) is visually visible to the outside of the housing (520) through the window (560), and optionally, the window (560) is provided with a cover (562), which is configured to be able to shield or expose the window (560) by, preferably, sliding or rotating or both.

8. Control system for a shredding device, the shredding device comprises a shredding mechanism, which comprises a shredding component (210, 310, 410) and an adjusting component (220, 320, 420), wherein the adjusting component (220, 320, 420) and the shredding component (210, 310, 410) define an operation space (230, 330, 430) for shredding operation, and the adjusting component (220, 320, 420) and the shredding component (210, 310, 410) are configured to be able to move relative to each other so as to adjust the operation space (230, 330, 430), and the control system comprises:
a detection circuit (610, 710, 1010), used to detect contact between the adjusting component (220, 320, 420) and the shredding component (210, 310, 410); and
a control circuit (620, 720), used to respond when the detection circuit (610, 710, 1010) detects the contact,
**characterized in that** the control system further comprises a user interface (140, 740, 1078), which is configured to be used to receive a user input to put the shredding device in a calibration mode (741), thereby activating the detection circuit (610, 710, 1010), and preferably the user interface (140, 740, 1078) comprises one or more of the following:
a component used to receive a user input to put the shredding component (210, 310, 410) in the reverse direction;
a component used to indicate the contact;
a component used to indicate blocking of the operation space (230, 330, 430);
a component used to indicate overload of the shredding device;
a component used to indicate the power level of the power supply device of the shredding device; and
a component used to receive a user input to change the operation speed of the shredding component (210, 310, 410).

9. Control system according to Claim 8, **characterized in that** the detection circuit (610, 710, 1010) comprises a current sensor or a voltage sensor (712).

10. Control system according to Claim 8 or 9, **characterized in that** the control system further comprises an alarm circuit (730), wherein the alarm circuit (730) sends an alarm signal in response to the contact, and the alarm signal is a visual signal or an audio signal or both.

11. Control system according to any of Claims 8 to 10, **characterized in that** the contact causes making of the detection circuit (610, 710, 1010) and hence causes a change in an electric signal, for example, a current change or a voltage change in the detection circuit (610, 710, 1010), in particular with one or more current spike signals, or with one or more voltage spike signals.

12. Control system according to any of Claims 8 to 11, **characterized in that** the control circuit (620, 720) is also configured to send a control signal to stop providing power to the shredding component (210, 310, 410) upon the contact.

## Patentansprüche

1. Zerkleinerungsmechanismus, umfassend:
eine Zerkleinerungskomponente (210, 310, 410), die zum Zerkleinern von Materialien dient; und
eine Einstellkomponente (220, 320, 420), wobei die Einstellkomponente (220, 320, 420) und die Zerkleinerungskomponente (210, 310, 410) einen Arbeitsraum (230, 330, 430) für den Zerkleinerungsvorgang definieren, und wobei die Einstellkomponente (220, 320, 420) und die Zerkleinerungskomponente (210, 310, 410) dazu ausgelegt sind, sich relativ zueinander bewegen zu können, um die Größe des Arbeitsraums (230, 330, 430) zu verändern, wobei der Zerkleinerungsmechanismus ferner eine Antriebskomponente (240, 340, 440) umfasst, die dazu ausgelegt ist, mit der Einstellkomponente (220, 320, 420) gekoppelt zu werden, um die Einstellkomponente (220, 320, 420) betriebsmäßig anzutreiben und sie relativ zur Zerkleinerungskomponente (210, 310, 410) zu bewegen,
**dadurch gekennzeichnet, dass** der Zerkleinerungsmechanismus ferner eine Verriegelungskomponente (450) umfasst, die dazu ausgelegt ist, die Antriebskomponente (440) betriebsmäßig zwischen einem ersten Zustand und einem zweiten Zustand umzuschalten, wobei die Antriebskomponente (440) im ersten Zustand nur eine Feineinstellung vornehmen kann und im zweiten Zustand eine Grobeinstellung vornehmen kann.

2. Zerkleinerungsmechanismus nach Anspruch 1,
**dadurch gekennzeichnet, dass** die Einstellkomponente (220, 320, 420) ein Plattenteil umfasst, das sich zur Einstellung des Arbeitsraums (230, 330, 430) betriebsmäßig bewegt, vorzugsweise verschwenkt.

3. Zerkleinerungsmechanismus nach Anspruch 1,
**dadurch gekennzeichnet, dass** die Antriebskomponente (240, 340, 440) dazu ausgelegt ist, sich beim Antreiben der Einstellkomponente (220, 320, 420) linear zu bewegen und/oder zu drehen, wobei vorzugsweise die Antriebskomponente (240, 340, 440) dazu ausgelegt ist, manuell und/oder elektrisch betätigt zu werden.

4. Zerkleinerungsmechanismus nach Anspruch 1 oder 3,
**dadurch gekennzeichnet, dass** die Antriebskomponente (240, 340, 440) eine spiralförmige Komponente ist, die insbesondere einen Bolzen umfasst.

5. Zerkleinerungsmechanismus nach Anspruch 1,
**dadurch gekennzeichnet, dass** die Antriebskomponente (440) die Einstellkomponente (220, 320, 420) entlang einer ersten Richtung zu der Zerkleinerungskomponente (210, 310, 410) hin antreibt, wobei die Verriegelungskomponente (450) die Antriebskomponente (440) entlang einer zweiten Richtung betätigt, die sich von der ersten Richtung unterscheidet, wobei die Antriebskomponente (440) ein erstes Gewinde aufweist, die Verriegelungskomponente (450) ein zweites Gewinde aufweist, das zweite Gewinde so ausgebildet ist, dass es mit dem ersten Gewinde in Eingriff gebracht werden kann, um die Antriebskomponente (440) in den ersten Zustand zu versetzen, und die Verriegelungskomponente (450) dazu ausgelegt ist, sich betriebsmäßig entlang der zweiten Richtung zu bewegen, um das zweite Gewinde und das erste Gewinde außer Eingriff zu bringen, wodurch die Antriebskomponente (440) in den zweiten Zustand versetzt wird.

6. Zerkleinerungsvorrichtung, **dadurch gekennzeichnet, dass** sie umfasst:
einen Zerkleinerungskörper (110, 510), der ein Gehäuse (120, 520) und den Zerkleinerungsmechanismus nach einem der Ansprüche 1 bis 5 umfasst, wobei das Gehäuse (120, 520) einen Einlass (122) zur Aufnahme von Materialien aufweist und der Zerkleinerungsmechanismus in dem Gehäuse (120, 520) vorgesehen und zum Zerkleinern von Materialien ausgebildet ist; und
ein Auffangteil (180, 580), das mit dem Zerkleinerungskörper (110, 510) verbunden ist und zur Aufnahme von Materialien nach dem Zerkleinerungsvorgang dient.

7. Zerkleinerungsvorrichtung nach Anspruch 6,
**dadurch gekennzeichnet, dass** das Gehäuse (520) ein Fenster (560) aufweist, so dass zumindest ein Teil des Arbeitsraums (230, 330, 430) durch das Fenster (560) von außerhalb des Gehäuses (520) einsehbar ist, wobei das Fenster (560) optional mit einer Abdeckung (562) versehen ist, die dazu ausgelegt ist, vorzugsweise durch Verschieben und/oder Verdrehen das Fenster (560) abzuschirmen bzw. freizugeben.

8. Steuerungssystem für eine Zerkleinerungsvorrichtung, wobei die Zerkleinerungsvorrichtung einen Zerkleinerungsmechanismus umfasst, der eine Zerkleinerungskomponente (210, 310, 410) und eine Einstellkomponente (220, 320, 420) umfasst, wobei die Einstellkomponente (220, 320, 420) und die Zerkleinerungskomponente (210, 310, 410) einen Arbeitsraum (230, 330, 430) für den Zerkleinerungsvorgang definieren, und wobei die Einstellkomponente (220, 320, 420) und die Zerkleinerungskomponente (210, 310, 410) dazu ausgelegt sind, sich relativ zueinander bewegen zu können, um den Arbeitsraum (230, 330, 430) einzustellen, und wobei das Steuerungssystem umfasst:
eine Erfassungsschaltung (610, 710, 1010), die dazu dient, einen Kontakt zwischen der Einstellkomponente (220, 320, 420) und der Zerkleinerungskomponente (210, 310, 410) zu erfassen; und
eine Steuerschaltung (620, 720), die dazu dient, zu reagieren, wenn die Erfassungsschaltung (610, 710, 1010) den Kontakt erfasst,
**dadurch gekennzeichnet, dass** das Steuerungssystem ferner eine Benutzerschnittstelle (140, 740, 1078) umfasst, die dazu ausgelegt ist, eine Benutzereingabe zu empfangen, um die Zerkleinerungsvorrichtung in einen Kalibrierungsmodus (741) zu versetzen, wodurch die Erfassungsschaltung (610, 710, 1010) aktiviert wird, und wobei die Benutzerschnittstelle (140, 740, 1078) vorzugsweise eine oder mehrere der folgenden Komponenten umfasst:
eine Komponente, die dazu dient, eine Benutzereingabe zu empfangen, um die Zerkleinerungskomponente (210, 310, 410) in die entgegengesetzte Richtung zu stellen;
eine Komponente, die dazu dient, den Kontakt anzuzeigen;
eine Komponente, die dazu dient, eine Blockierung des Arbeitsraums (230, 330, 430) anzuzeigen;
eine Komponente, die dazu dient, eine Überlastung der Zerkleinerungsvorrichtung anzuzeigen;
eine Komponente, die dazu dient, den Leistungspegel der Stromversorgungsvorrichtung der Zerkleinerungsvorrichtung anzuzeigen; und
eine Komponente, die dazu dient, eine Benutzereingabe zu empfangen, um die Betriebsgeschwindigkeit der Zerkleinerungskomponente (210, 310, 410) zu ändern.

9. Steuerungssystem nach Anspruch 8,
**dadurch gekennzeichnet, dass** die Erfassungsschaltung (610, 710, 1010) einen Stromsensor oder einen Spannungssensor (712) umfasst.

10. Steuerungssystem nach Anspruch 8 oder 9,
**dadurch gekennzeichnet, dass** das Steuerungssystem ferner eine Alarmschaltung (730) umfasst, wobei die Alarmschaltung (730) als Reaktion auf den Kontakt ein Alarmsignal ausgibt und das Alarmsignal ein visuelles Signal und/oder ein akustisches Signal ist.

11. Steuerungssystem nach einem der Ansprüche 8 bis 10,
**dadurch gekennzeichnet, dass** der Kontakt ein Schließen der Erfassungsschaltung (610, 710, 1010) bewirkt und somit eine Änderung eines elektrischen Signals, beispielsweise eine Stromänderung oder eine Spannungsänderung in der Erfassungsschaltung (610, 710, 1010), bewirkt, insbesondere mit einem oder mehreren Stromspitzensignalen oder mit einem oder mehreren Spannungsspitzensignalen.

12. Steuerungssystem nach einem der Ansprüche 8 bis 11,
**dadurch gekennzeichnet, dass** die Steuerschaltung (620, 720) ferner dazu ausgelegt ist, bei Kontakt ein Steuersignal auszugeben, um die Stromversorgung der Zerkleinerungskomponente (210, 310, 410) zu unterbrechen.

## Revendications

1. Mécanisme de déchiquetage, comprenant :
un composant de déchiquetage (210, 310, 410), utilisé pour déchiqueter des matériaux ; et
un composant de réglage (220, 320, 420), le composant de réglage (220, 320, 420) et le composant de déchiquetage (210, 310, 410) définissant un espace de fonctionnement (230, 330, 430) pour l'opération de déchiquetage, et le composant de réglage (220, 320, 420) et le composant de déchiquetage (210, 310, 410) étant conçus pour pouvoir se déplacer l'un par rapport à l'autre de manière à modifier la taille de l'espace de fonctionnement (230, 330, 430), le mécanisme de déchiquetage comprenant en outre un composant d'entraînement (240, 340, 440) qui est conçu pour être couplé au composant de réglage (220, 320, 420) de manière à entraîner de façon fonctionnelle le composant de réglage (220, 320, 420) pour qu'il se déplace par rapport au composant de déchiquetage (210, 310, 410),
**caractérisé en ce que** le mécanisme de déchiquetage comprend en outre un composant de verrouillage (450) qui est conçu pour commuter de manière fonctionnelle le composant d'entraînement (440) entre un premier état et un deuxième état, sachant que le composant d'entraînement (440), dans le premier état, est autorisé à effectuer uniquement un réglage fin, et, dans le deuxième état, est autorisé à effectuer un réglage grossier.

2. Mécanisme de déchiquetage selon la revendication 1,
**caractérisé en ce que** le composant de réglage (220, 320, 420) comprend une partie en forme de plaque qui se déplace de manière fonctionnelle, de préférence en pivotement, pour régler l'espace de fonctionnement (230, 330, 430).

3. Mécanisme de déchiquetage selon la revendication 1,
**caractérisé en ce que** le composant d'entraînement (240, 340, 440) est conçu pour se déplacer linéairement ou pour tourner, ou les deux, lorsqu'il entraîne le composant de réglage (220, 320, 420), et de préférence, le composant d'entraînement (240, 340, 440) est conçu pour être actionné manuellement ou électriquement, ou les deux.

4. Mécanisme de déchiquetage selon la revendication 1 ou 3,
**caractérisé en ce que** le composant d'entraînement (240, 340, 440) est un composant en spirale, comprenant en particulier un boulon.

5. Mécanisme de broyage selon la revendication 1,
**caractérisé en ce que** le composant d'entraînement (440) entraîne le composant de réglage (220, 320, 420) le long d'une première direction vers le composant de déchiquetage (210, 310, 410), le composant de verrouillage (450) actionne le composant d'entraînement (440) le long d'une deuxième direction différente de la première direction, le composant d'entraînement (440) comporte un premier pas de vis, le composant de verrouillage (450) comporte un deuxième pas de vis, le deuxième pas de vis est conçu pour pouvoir venir en engagement avec le premier pas de vis de manière à placer le composant d'entraînement (440) dans le premier état, et le composant de verrouillage (450) est conçu pour se déplacer de manière fonctionnelle le long de la deuxième direction de manière à désengager le deuxième pas de vis et le premier pas de vis, plaçant ainsi le composant d'entraînement (440) dans le deuxième état.

6. Dispositif de déchiquetage, **caractérisé en ce qu'**il comprend :
un corps de déchiquetage (110, 510), comprenant un boîtier (120, 520) et le mécanisme de déchiquetage selon l'une des revendications 1 à 5, le boîtier (120, 520) présentant une entrée (122) qui sert à recevoir des matériaux, et le mécanisme de déchiquetage étant prévu dans le boîtier (120, 520) et conçu pour déchiqueter des matériaux ; et
une partie de collecte (180, 580) reliée au corps de déchiquetage (110, 510) et servant à recevoir les matériaux après l'opération de déchiquetage.

7. Dispositif de déchiquetage selon la revendication 6,
**caractérisé en ce que** le boîtier (520) présente une fenêtre (560), de sorte qu'au moins une partie de l'espace de fonctionnement (230, 330, 430) est visible de l'extérieur du boîtier (520) à travers la fenêtre (560), et, en option, la fenêtre (560) est pourvue d'un couvercle (562) qui est conçu pour pouvoir masquer ou dégager la fenêtre (560) par, de préférence, coulissement ou rotation, ou les deux.

8. Système de commande pour un dispositif de déchiquetage, le dispositif de déchiquetage comprenant un mécanisme de déchiquetage qui comprend un composant de déchiquetage (210, 310, 410) et un composant de réglage (220, 320, 420), le composant de réglage (220, 320, 420) et le composant de déchiquetage (210, 310, 410) définissant un espace de fonctionnement (230, 330, 430) pour l'opération de déchiquetage, et le composant de réglage (220, 320, 420) et le composant de déchiquetage (210, 310, 410) étant conçus pour pouvoir se déplacer l'un par rapport à l'autre de manière à régler l'espace de fonctionnement (230, 330, 430), et le système de commande comprenant :
un circuit de détection (610, 710, 1010) servant à détecter un contact entre le composant de réglage (220, 320, 420) et le composant de déchiquetage (210, 310, 410) ; et
un circuit de commande (620, 720) servant à réagir lorsque le circuit de détection (610, 710, 1010) détecte le contact,
**caractérisé en ce que**
le système de commande comprend en outre une interface utilisateur (140, 740, 1078) qui est conçue pour servir à recevoir une entrée de l'utilisateur pour mettre le dispositif de déchiquetage en mode de calibrage (741), activant ainsi le circuit de détection (610, 710, 1010), et de préférence l'interface utilisateur (140, 740, 1078) comprend un ou plusieurs des composants suivants :
un composant servant à recevoir une entrée de l'utilisateur afin mettre le composant de déchiquetage (210, 310, 410) en sens inverse ;
un composant servant à signaler le contact ;
un composant servant à signaler le blocage de l'espace de fonctionnement (230, 330, 430) ;
un composant servant à signaler une surcharge du dispositif de déchiquetage ;
un composant servant à indiquer le niveau de puissance du dispositif d'alimentation électrique du dispositif de déchiquetage ; et
un composant servant à recevoir une entrée de l'utilisateur afin de modifier la vitesse de fonctionnement du composant de déchiquetage (210, 310, 410).

9. Système de commande selon la revendication 8,
**caractérisé en ce que** le circuit de détection (610, 710, 1010) comprend un capteur de courant ou un capteur de tension (712).

10. Système de commande selon la revendication 8 ou 9,
**caractérisé en ce que** le système de commande comprend en outre un circuit d'alarme (730), le circuit d'alarme (730) émettant un signal d'alarme en réponse au contact, et le signal d'alarme étant un signal visuel ou un signal sonore, ou les deux.

11. Système de commande selon l'une des revendications 8 à 10,
**caractérisé en ce que** le contact provoque la fermeture du circuit de détection (610, 710, 1010) et entraîne ainsi une variation d'un signal électrique, par exemple une variation de courant ou une variation de tension dans le circuit de détection (610, 710, 1010), en particulier avec un ou plusieurs signaux de pic de courant, ou avec un ou plusieurs signaux de pic de tension.

12. Système de commande selon l'une des revendications 8 à 11,
**caractérisé en ce que** le circuit de commande (620, 720) est en outre conçu pour émettre un signal de commande afin de couper l'alimentation du composant de déchiquetage (210, 310, 410) lors du contact.
